# EUROPÄISCHE PATENTSCHRIFT

(11) **EP 3 530 157 B1**
(45) Veröffentlichungstag und Bekanntmachung des Hinweises auf die Patenterteilung: **24.06.2020**
(21) Anmeldenummer: 19155501.0
(22) Anmeldetag: 05.02.2019
(51) Int. Cl.: A47J 31/60

(54) **HAUSHALTSGERÄT**
HOUSEHOLD APPLIANCE
APPAREIL MÉNAGER

(30) Priorität: 27.02.2018 DE 102018104395
(43) Veröffentlichungstag der Anmeldung: 28.08.2019
(73) Patentinhaber: Miele & Cie. KG, 33332 Gütersloh (DE)
(72) Erfinder: Held, Benjamin, 32549 Bad Oeynhausen (DE); Pötter, Berthold, 33332 Gütersloh (DE); Wüstefeld, Michael, 59555 Lippstadt (DE)

(56) Entgegenhaltungen:
- EP-A1- 3 097 829
- WO-A1-2012/035247
- DE-A1-102014 113 160

## Beschreibung

Die Erfindung betrifft ein Haushaltsgerät, mit einem Strömungsleitungssystem, in dem Fluide in hierfür geeigneten Strömungsleitungen fließen. Ein lösbar in dem Haushaltsgerät aufgenommener Pflegemittelbehälter, in dem ein zur Pflege des Strömungsleitungssystems geeignetes, ursprünglich einen festen Aggregatzustand aufweisendes Pflegemittel enthalten ist, wird mit seiner Öffnung in geozentrischer Richtung, also nach unten weisend, in das Haushaltsgerät eingesetzt. In die Öffnung des Pflegemittelbehälters ragt dabei eine Sprüheinrichtung hinein, um Reinigungs- oder Pflegeprogramme durchzuführen, für die das Pflegemittel in dem Pflegemittelbehälter mit einer Flüssigkeit angesprüht wird, sodass das Pflegemittel dadurch bedarfsgerecht in eine Lösung übergeht, die anschließend dem Strömungsleitungssystem zur Verfügung steht.

Derartige Lösungen sind bereits aus der DE 10 2014 113 160 A1 und der DE 10 2014 113 161 A1 bekannt. In dem Pflegemittelbehälter befindet sich auch hierbei ein Pflegemittel, mit einem festen Aggregatzustand, das durch Ansprühen mit Wasser von der Öffnungsseite des Pflegemittelbehälters her bedarfsgerecht in eine Lösung überführt wird. Dadurch kann erreicht werden, dass regelmäßige Pflege- beziehungsweise Reinigungsprogramme über einen längeren Zeitraum durchgeführt werden können, als dies beispielsweise bei flüssigen Reinigern oder Pflegemitteln möglich wäre, die häufig in Einwegbehältern zur Verfügung gestellt werden. Das einen festen Aggregatzustand aufweisende Pflegemittel liegt hierbei zum Beispiel in gepresster Form oder in Pulverform vor.

In Abhängigkeit von der Häufigkeit der durchgeführten Pflege- beziehungsweise Reinigungsprogramme kommt irgendwann der Zeitpunkt, an dem der Pflegemittelbehälter ausgetauscht oder mit frischem Pflegemittel befüllt werden muss. Bei bisher bekannten Lösungen ist dies für den Anwender häufig nicht ganz einfach und erfordert eine gewisse Routine, weil der Pflegemittelbehälter in der Regel in den Innenraum des Haushaltsgerätes eingesetzt und damit seine Zugänglichkeit erschwert ist. Zugangsschwierigkeiten zu dem Pflegemittelbehälter ergeben sich oft auch aus der räumlichen Begrenzung des zur Verfügung stehenden Bauraumes.

Die WO 2012/035247 A1 beschreibt bereits einen Lösungsansatz, den Austausch beziehungsweise das Befüllen des Pflegemittelbehälters zu erleichtern. Der Pflegemittelbehälter wird hierfür von der Unterseite her in einen in einer Führung translatorisch bewegbaren Schlitten eingesetzt, wobei zur Herstellung der Verbindung zwischen dem Pflegemittelbehälter und dem Schlitten in dem Schlitten ein Gewinde vorhanden ist, in das ein öffnungsseitig an dem Pflegemittelbehälter vorhandenes, korrespondierendes Gewinde eingeschraubt wird. In den Pflegemittelbehälter ragt ferner ein Ansaugrohr hinein, über das im Bedarfsfall in dem Pflegemittelbehälter vorhandenes, flüssiges Pflegemittel absaugt werden kann. Für die Absaugung ist jedoch eine zusätzliche Pumpe erforderlich, sodass diese Ausführung eines Haushaltsgerätes verhältnismäßig aufwendig und kostenintensiv ist. Zudem wird durch die Vielzahl unterschiedlicher Bauelemente eine Reinigung zusätzlich erschwert.

Der Erfindung stellt sich somit das Problem, ein insgesamt vereinfachtes Haushaltsgerät bereitzustellen, bei dem für die Durchführung erforderlicher Pflege- beziehungsweise Reinigungsprogramme ein Pflegemittelbehälter vorhanden ist, der ohne einen erheblichen Montageaufwand austauschbar ist oder mit neuem Pflegemittel befüllt werden kann, wobei insbesondere Wert auf eine einfache Reinigung sämtlicher, den Pflegemittelbehälter umgebender Bauelemente zu legen ist.

Erfindungsgemäß wird dieses Problem durch ein Haushaltsgerät mit den Merkmalen des Patentanspruches 1 gelöst.
Vorteilhafte Ausgestaltungen und Weiterbildungen der Erfindung ergeben sich aus den nachfolgenden Unteransprüchen.

Ein Haushaltsgerät, umfassend ein Fluide führendes Strömungsleitungssystem und einen lösbar in dem Haushaltsgerät aufgenommenen Pflegemittelbehälter, in dem ein zur Pflege des Strömungsleitungssystems geeignetes, einen festen Aggregatzustand aufweisendes Pflegemittel enthalten ist, wobei der Pflegemittelbehälter mit seiner Öffnung in geozentrischer Richtung, also nach unten weisend, in dem Haushaltsgerät aufgenommen ist und zur Durchführung eines Pflegeprogramms eine in die Öffnung des Pflegemittelbehälters hineinragende Sprüheinrichtung zum Ansprühen des Pflegemittels mit einer Flüssigkeit und dadurch bedingter, bedarfsgerechter Herstellung einer Lösung des Pflegemittels vorhanden ist, wurde erfindungsgemäß dahingehend weitergebildet, dass der Pflegemittelbehälter in einen über geeignete Führungsmittel bewegbar geführten Schlitten einsetzbar und der Schlitten vollständig aus dem Haushaltsgerät entnehmbar ist.

Durch die Erfindung wird eine einfache Montage und Demontage des Pflegemittelbehälters gewährleistet, wobei gleichzeitig eine optimale Reinigungsmöglichkeit sämtlicher, den Pflegemittelbehälter umgebender Bauteile gegeben ist. Der Pflegemittelbehälter kann dabei problemlos in den Schlitten eingesetzt oder aus dem Schlitten entfernt werden. Ein weiterer Vorteil ergibt sich daraus, dass mit dieser Lösung Einwegprodukte vermieden werden können, was wirtschaftlich und ökologisch sinnvoll ist. Durch die Anwendung des Schlittens wird der Pflegemittelbehälter mit einem festen Halt, in einer definierten Position fixiert und kann, ebenso wie der Schlitten, nutzerfreundlich gereinigt werden.
Um das Herausnehmen des Schlittens zu erleichtern, können die Führungsmittel in seitlich in den Schlitten eingebrachten Nuten bestehen, wobei die Geometrie des Schlittens, in einer Ansicht von oben, zueinander parallele, die Führungsmittel enthaltende Seitenwände aufweist und der Schlitten einseitig, also auf der in das Geräteinnere weisenden Frontseite, mit einer keilförmigen, sich verjüngenden Kontur ausgestattet ist.

Eine erste Ausgestaltung der Erfindung ist darin zu sehen, dass der Pflegemittelbehälter formschlüssig, über eine Steck-, Rast- oder Gewindeverbindung fixiert in dem Schlitten aufgenommen ist. Somit reduziert sich der Zeitaufwand für den Austausch oder die Befüllung des Pflegemittelbehälters wesentlich, was insgesamt eine erhebliche Verbesserung der Handhabung des erfindungsgemäßen Haushaltsgerätes bedeutet.

Um die Fixierung des Pflegemittelbehälters in dem Schlitten und das Lösen des Pflegemittelbehälters aus dem Schlitten weiter zu vereinfachen, wird darüber hinaus vorgeschlagen, dass das Gewinde zur Herstellung einer lösbaren Verbindung zwischen Pflegemittelbehälter und Schlitten mehrzügig ausgeführt ist. Dabei ist insbesondere auch auf Leichtgängigkeit des Gewindes zu achten.

In besonders bevorzugter Weise weist das Gewinde eine Selbsthemmung auf und ist zweizügig ausgeführt.

Die in die Öffnung des Pflegemittelbehälters hineinragende Sprüheinrichtung weist gemäß einer weiteren Ausgestaltung der Erfindung eine Sprühdüse auf, die bei in das Haushaltsgerät eingesetztem Pflegemittelbehälter zentral in die Öffnung des Pflegemittelbehälters hineinragt. Durch die zentrale Anordnung der Sprühdüse in die Öffnung des Pflegemittelbehälters wird das darin enthaltene Pflegemittel sehr gleichmäßig in eine Lösung überführt und damit optimal ausgenutzt.

Wie zuvor bereits ausgeführt wurde, stellt es auch in diesem Zusammenhang einen erheblichen Vorteil der Erfindung dar, dass der Pflegemittelbehälter vertikal ausgerichtet in dem Schlitten aufgenommen ist. Der in einem Haushaltsgerät vorhandene Bauraum ist eng begrenzt, was dazu führt, dass die exakt vertikale Ausrichtung des Pflegemittelbehälters auch eine Optimierung der Unterbringung des Schlittens mit dem darin aufgenommenen Pflegemittelbehälter in dem Haushaltsgerät gewährleistet.

Im Zuge der grundlegenden Aufgabenstellung, ein Haushaltsgerät bereitzustellen, dessen Pflegemittelbehälter und dessen Schlitten möglichst einfach zu handhaben und zu reinigen sind, besteht eine sehr vorteilhafte Lösung der Erfindung darin, dass der Schlitten aus einem Werkstoff besteht, der zur Reinigung in einer Geschirrspülmaschine geeignet ist. Somit kann der vollständig aus dem Haushaltsgerät entnommene Schlitten optimal gereinigt werden, ohne dass der Aufwand hierfür erheblich ist. Natürlich liegt es im Sinne der Erfindung, auch den Pflegemittelbehälter aus einem Werkstoff herzustellen, der es erlaubt, den Pflegemittelbehälter in einer Geschirrspülmaschine zu reinigen.

Darüber hinaus stellt es eine wesentliche, fertigungstechnische Vereinfachung dar, wenn der Schlitten insgesamt ein einteilig ausgeführtes Kunststoff-Formteil ist. Gleiches trifft selbstverständlich auch auf den Pflegemittelbehälter zu.

Da der zum Einsatz kommende Pflegemittelbehälter aufgrund des Umstandes, dass er ein Pflegemittel enthält, das einen festen Aggregatzustand aufweist, relativ selten ausgetauscht, beziehungsweise neu befüllt werden muss, stellt es einen überwiegend ästhetischen Gesichtspunkten folgenden Vorteil dar, wenn das Haushaltsgerät einen Schacht aufweist, in dem im Betriebszustand der Schlitten zusammen mit dem darin aufgenommenen Pflegemittelbehälter vollständig aufgenommen ist. Somit ist sowohl der Schlitten, als auch der Pflegemittelbehälter dem Sichtbereich des Anwenders entzogen.

Da jedoch ein Austausch des Pflegemittelbehälters oder des darin enthaltenen Pflegemittels grundsätzlich möglich sein muss, besteht eine sehr einfache Lösung der optischen Abdeckung darin, den Schacht durch eine Tür zu verschließen, die im Bedarfsfall geöffnet werden kann.

Zur Vermeidung von Beschädigungen oder um auszuschließen, dass der Schlitten den Pflegemittelbehälter nicht exakt oberhalb der Sprüheinrichtung positioniert, wird darüber hinaus vorgeschlagen, dass die Endposition des Schlittens in dem Schacht durch eine Rasterung haptisch wahrnehmbar ausgeführt ist. Die haptische Wahrnehmbarkeit kann dabei mit einem Rastnocken oder durch einen spürbaren Endanschlag erreicht werden.

Zum Ein- und Ausfahren des Schlittens besteht einerseits die Möglichkeit, diesen elektromotorisch verfahrbar auszuführen. Eine wesentlich einfachere Lösung ist jedoch in einer manuellen Bewegbarkeit des Schlittens zu sehen. Hierfür wird vorgeschlagen, dass der Schlitten an seiner sichtbaren Frontseite einen Griff aufweist, bei dem es sich gemäß einer weiteren Ausgestaltung der Erfindung um eine Griffmulde handeln kann.

Als Haushaltsgerät der hier betroffenen Art ist beispielsweise ein Geschirrspüler, ein Getränkeautomat oder eine Waschmaschine anzusehen, wobei diese Aufzählung nicht abschließend ist. Vielmehr können jegliche Haushaltsgeräte, die ein Strömungsleitungssystem aufweisen, mit einem derartigen, in einem herausnehmbaren Schlitten aufgenommenen Pflegemittelbehälter ausgestattet werden, um regelmäßige Reinigungs- oder Pflegeprogramme durchführen zu können und damit für die Werterhaltung des Haushaltsgerätes Sorge zu tragen.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ein Teil eines Haushaltsgerätes in einer vereinfachten Darstellung,
- Figur 2:: einen Schlitten als isoliertes Einzelteil und in einer perspektivischen Ansicht,
- Figur 3:: die Frontansicht eines Haushaltsgerätes am Beispiel eines Getränkeautomaten
und
- Figur 4:: einen Blick in den Getränkeautomaten aus Figur 3 bei geöffneter Tür.

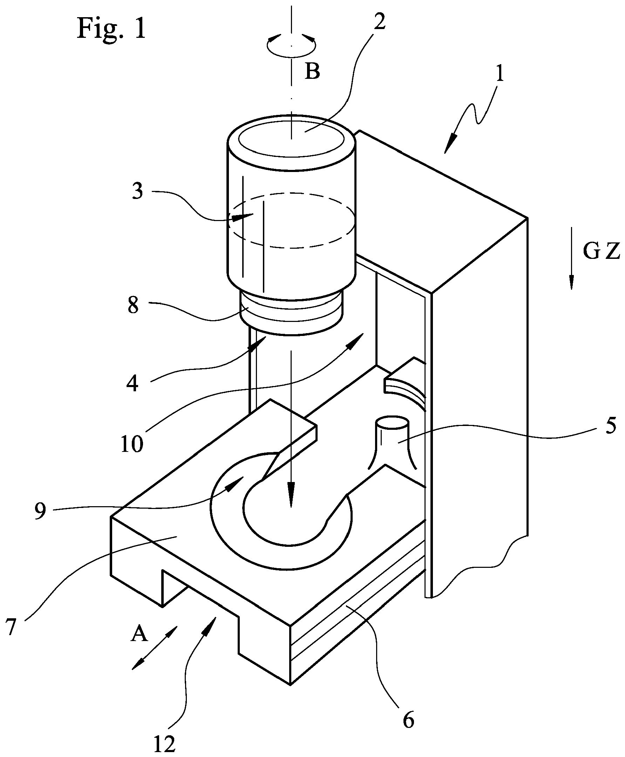

Der in Figur 1 dargestellte Teil eines Haushaltsgerätes 1 in einer vereinfachten Darstellung zeigt einen Schacht 10, in dem ein Schlitten 7 in Längsrichtung, also translatorisch verschiebbar aufgenommen ist. Zur Umsetzung der Bewegbarkeit des Schlittens 7 weist dieser seitliche Führungsmittel 6 auf, bei denen es sich im vorliegenden Fall um Führungsnuten handelt. An der Innenseite des Schachtes 10 sind hierzu korrespondierende, jedoch in der Figur 1 nicht erkennbare Führungsmittel vorhanden, die in die Führungsnuten 6 eingreifen. An seiner nach außen weisenden Seite weist der Schlitten 7 ferner eine Griffmulde 12 auf, die dem Erfassen des Schlittens 7 und damit seiner Handhabung dient. Auf diese Weise kann der Schlitten 7 beispielsweise in Richtung des Doppelpfeils "A" manuell in den Schacht 10 hinein oder aus dem Schacht 10 heraus bewegt werden. Das zentrale Element des Schlittens 7 stellt eine Ausnehmung 13 mit einem an der Wand ausgebildeten Innengewinde 9 dar, in das ein korrespondierendes Außengewinde 8 eines Pflegemittelbehälters 2 in Richtung des Doppelpfeils "B" eingeschraubt werden kann. Der Pflegemittelbehälter 2 ist mit einem Pflegemittel 3 befüllt, das einen festen Aggregatzustand aufweist. Er wird mit seiner Öffnung 4 in geozentrischer Richtung GZ, also nach unten, in das Gewinde 9 des Schlittens 7 eingeschraubt, sodass bei in den Schacht 10 eingeschobenem Schlitten 7 eine Sprüheinrichtung 5 vertikal in die Öffnung 4 des Pflegemittelbehälters 2 hineinragt. Mit Hilfe der Sprüheinrichtung 5 kann eine Flüssigkeit, also beispielsweise Wasser, gegen die Oberfläche des in dem Pflegemittelbehälter 2 vorhandenen Pflegemittels 3 gesprüht werden, sodass bedarfsgerecht eine definierte Menge des Pflegemittels 3 in eine Lösung übergeht. Diese Lösung wird aus dem Pflegemittelbehälter 2 abgeführt und dem Strömungsleitungssystem des Haushaltsgerätes 1 zugeführt, damit dieses einem Reinigungs- oder Pflegeprogramm unterzogen werden kann. Da der Pflegemittelbehälter 2 über ein Gewinde 8 in den Schlitten 7 eingeschraubt ist, kann er jederzeit entfernt und beispielsweise durch einen neuen ersetzt oder mit frischem Pflegemittel 3 aufgefüllt werden.

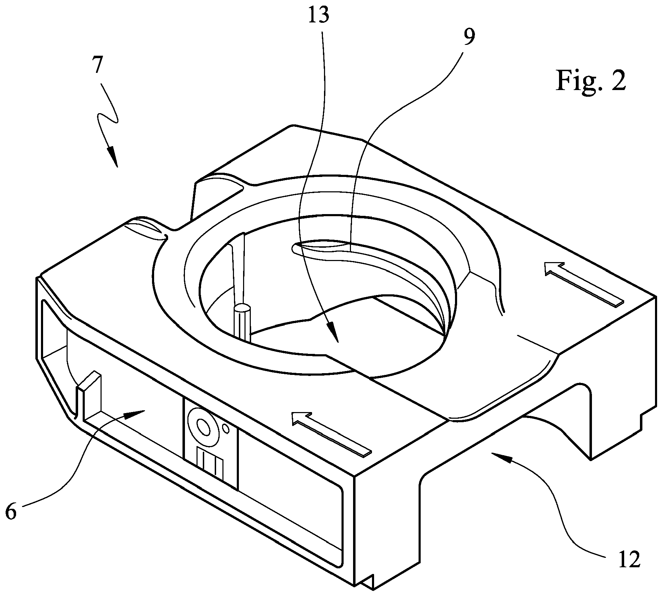

Aus der Figur 2 geht ein Schlitten 7 als isoliertes Einzelteil und in einer perspektivischen Ansicht hervor. Hieraus wird noch einmal deutlicher, als dies im Zusammenhang mit der Beschreibung der Figur 1 der Fall war, hervor, dass der Schlitten 7 seitlich Führungsnuten 6 als Führungsmittel aufweist, um ihn innerhalb des Haushaltsgerätes 1 hin- und herbewegen zu können. Um das Herausnehmen des Schlittens 7 zu erleichtern, weist die Geometrie des Schlittens 7, in einer Ansicht von oben, zueinander parallele, die Führungsmittel 6 enthaltende Seitenwände auf, wobei der Schlitten einseitig, also auf der in den Schacht 10 weisenden Seite, mit einer keilförmigen, sich verjüngenden Kontur ausgestattet ist. Die etwa zentral angeordnete Ausnehmung 13 zur Aufnahme des Pflegemittelbehälters 2 ist entlang ihrer Umfangslinie mit einem Gewinde 9 ausgestattet, in das das korrespondierende Außengewinde 8 des Pflegemittelbehälters 2 eingeschraubt wird.

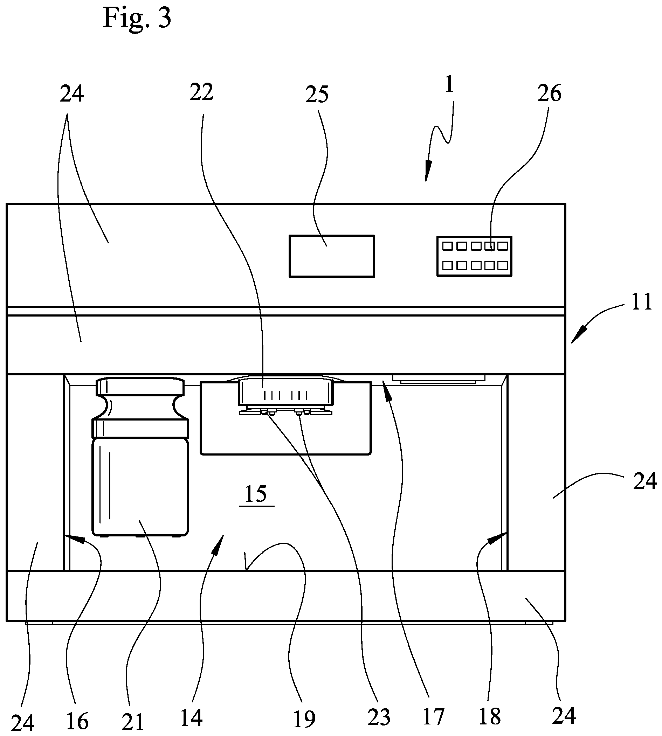

Bei dem in Figur 3 gezeigten Haushaltsgerät 1 handelt es sich um einen Getränkeautomaten zur Herstellung von Aufgussgetränken, also beispielsweise zur Zubereitung von Tee oder Kaffee. Die Besonderheit des hier dargestellten Haushaltsgerätes 1 besteht darin, dass dieses in einen Küchenschrank integriert und somit platzsparend untergebracht ist. Ein derartiges Haushaltsgerät 1 weist einen als muldenartige Vertiefung ausgeführten Ausgabebereich 14 auf, der von mehreren Seitenwänden 15, 16, 17, 18 begrenzt ist, von denen die Seitenwand 15 als Rückwand des Ausgabebereiches 14 dient. Den unteren Teil des Ausgabebereiches 14 bildet eine Abstellfläche 19, auf der ein Trinkgefäß abgestellt werden kann, das mit einem in dem Getränkeautomaten hergestellten Aufgussgetränk befüllt wird. Die Abstellfläche 19 weist darüber hinaus in an sich bekannter Weise mehrere, hier nicht erkennbare Ablauföffnungen auf, über die verspritzte oder übergelaufene Flüssigkeitsreste in eine unterhalb der Abstellfläche 19 angeordnete Abtropfschale 20 abgeführt werden können. In den Ausgabebereich 14 ist bei dem Beispiel in Figur 3 darüber hinaus ein Milchgefäß 21 integriert, welches hier in eine Aufnahme lösbar eingehängt und somit ohne Berührungskontakt zu der Abstellfläche 19 in dem Ausgabebereich 14 aufgenommen ist. Es sind jedoch auch Varianten möglich, bei denen das Milchgefäß 21 auf der Abstellfläche 19 abgestellt wird. Darüber hinaus mündet in den Ausgabebereich 14 eine Ausgabevorrichtung 22, an deren Unterseite mehrere Getränkeauslässe 23 vorhanden sind, die der Abgabe der hergestellten Aufgussgetränke oder von Getränkezugaben, wie Milch, oder von Mischgetränken dienen. Ein derartiges Haushaltsgerät 1 weist mehrere, als Blenden 24 ausgeführte Verkleidungsteile auf, die hauptsächlich ästhetischen Gesichtspunkten entsprechen. Um den Innenraum eines derartigen Haushaltsgerätes 1 zugänglich zu machen, ist die gesamte Frontseite als eine Tür 11 ausgeführt, die geöffnet und verschlossen werden kann. Ferner weist das als Getränkeautomat ausgeführte Haushaltsgerät 1 eine Anzeigeeinrichtung 25 in Form eines Displays und eine Tastatur 26 zur Programmierung beziehungsweise Eingabe von Daten auf.

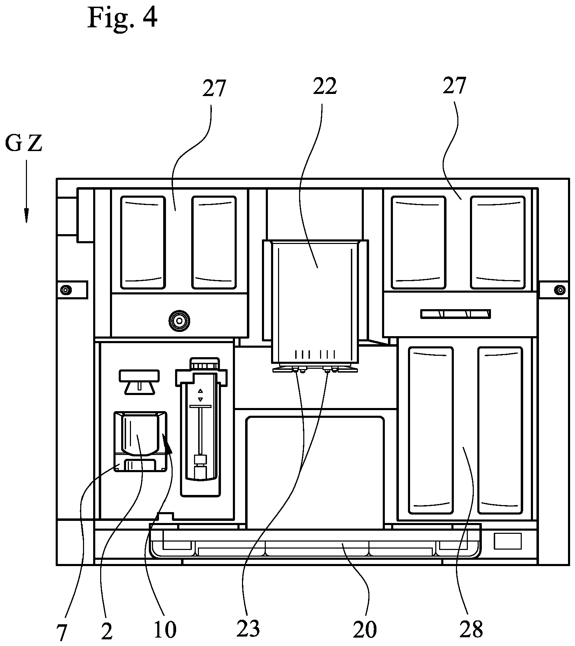

Schließlich erlaubt die Figur 4 einen Blick in den Getränkeautomaten aus Figur 3, ohne die Tür 11. Hinter der Tür 11 ist der Pflegemittelbehälter 2 innerhalb des Haushaltsgerätes 1 angeordnet, der, in geozentrischer Richtung GZ, also mit seiner Öffnung 4 nach unten weisend, in eine korrespondierende und mit einem Gewinde 9 ausgestattete Ausnehmung 13 des Schlittens 7 eingesetzt ist. Mittels der Sprüheinrichtung 5, die in die Öffnung 4 des Pflegemittelbehälters 2 mündet und vorliegend Wasser auf das in dem Pflegemittelbehälter 2 vorhandene Pflegemittel 3 sprüht, wird erreicht, dass das Pflegemittel 3 teilweise und bedarfsgerecht in eine Lösung überführt wird und damit dem Fluide führenden Strömungsleitungssystem des Haushaltsgerätes 1 zur Verfügung steht, um hier ein Reinigungs- beziehungsweise Pflegeprogramm durchführen zu können. Ein nicht gezeigter Mischbehälter kann dabei dazu dienen, dass gelöste Pflegemittel 3 mit Wasser zu mischen, um dadurch eine für die Pflege beziehungsweise Reinigung des Haushaltsgerätes 1 geeignete Konzentration des gelösten Pflegemittels 3 bereitzustellen. Der Pflegemittelbehälter 2 ist zusammen mit dem diesen aufnehmenden Schlitten 7 in dem Schacht 10 aufgenommen und wird folglich bei geschlossener Tür 11 durch die Tür 11 verdeckt. Der Blick auf den Innenraum des Haushaltsgerätes 1 in Figur 4 zeigt auch, dass dieser in an sich bekannter Weise über mehrere Vorratsbehälter 27 sowie einen Wassertank 28 verfügt. Bei geöffneter Tür wird auch die unterhalb der Abstellfläche 19 angeordnete Abtropfschale 20 sichtbar, in die übergelaufene oder verspritzte Flüssigkeitsreste abgeführt werden können.

### BEZUGSZEICHENLISTE:

- 1: Haushaltsgerät
- 2: Pflegemittelbehälter
- 3: Pflegemittel
- 4: Öffnung (des Pflegemittelbehälters)
- 5: Sprüheinrichtung
- 6: Führungsmittel
- 7: Schlitten
- 8: Gewinde (am Pflegemittelbehälter)
- 9: Gewinde (im Schlitten)
- 10: Schacht
- 11: Tür
- 12: Griff
- 13: Ausnehmung
- 14: Ausgabebereich
- 15: Seitenwand (Rückwand)
- 16: Seitenwand
- 17: Seitenwand
- 18: Seitenwand
- 19: Abstellfläche
- 20: Abtropfschale
- 21: Milchgefäß
- 22: Ausgabevorrichtung
- 23: Getränkeauslass
- 24: Blende
- 25: Anzeigeeinrichtung (Display)
- 26: Tastatur
- 27: Vorratsbehälter
- 28: Wasserbehälter

## Patentansprüche

1. Haushaltsgerät (1), umfassend ein Fluide führendes Strömungsleitungssystem und einen lösbar in dem Haushaltsgerät (1) aufgenommenen Pflegemittelbehälter (2), in dem ein zur Pflege des Strömungsleitungssystems geeignetes, einen festen Aggregatzustand aufweisendes Pflegemittel (3) enthalten ist, wobei der Pflegemittelbehälter (1) mit seiner Öffnung (4) in geozentrischer Richtung (GZ), also nach unten weisend, in dem Haushaltsgerät (1) aufgenommen ist und zur Durchführung eines Pflegeprogramms eine in die Öffnung (4) des Pflegemittelbehälters (2) hineinragende Sprüheinrichtung (5) zum Ansprühen des Pflegemittels (3) mit einer Flüssigkeit und dadurch bedingter, bedarfsgerechter Herstellung einer Lösung des Pflegemittels (3) vorhanden ist,
**dadurch gekennzeichnet, dass**
der Pflegemittelbehälter (2) in einen über geeignete Führungsmittel (6) bewegbar geführten Schlitten (7) einsetzbar und der Schlitten (7) vollständig aus dem Haushaltsgerät (1) entnehmbar ist.

2. Haushaltsgerät nach Anspruch 1,
**dadurch gekennzeichnet, dass**
der Pflegemittelbehälter (2) formschlüssig, über eine Steck-, Rast- oder Gewindeverbindung fixiert in dem Schlitten (7) aufgenommen ist.

3. Haushaltsgerät nach Anspruch 2,
**dadurch gekennzeichnet, dass**
das Gewinde (8, 9) zur Herstellung einer lösbaren Verbindung zwischen Pflegemittelbehälter (2) und Schlitten (7) mehrzügig ausgeführt ist.

4. Haushaltsgerät nach Anspruch 3,
**dadurch gekennzeichnet, dass**
das Gewinde (8, 9) eine Selbsthemmung aufweist und zweizügig ausgeführt ist.

5. Haushaltsgerät nach einem der vorstehend genannten Ansprüche,
**dadurch gekennzeichnet, dass**
die Sprüheinrichtung (5) eine Sprühdüse aufweist, die bei in das Haushaltsgerät (1) eingesetztem Pflegemittelbehälter (2) zentral in die Öffnung (4) des Pflegemittelbehälters (2) hineinragt.

6. Haushaltsgerät nach einem der vorstehend genannten Ansprüche,
**dadurch gekennzeichnet, dass**
der Pflegemittelbehälter (2) vertikal ausgerichtet in dem Schlitten (7) aufgenommen ist.

7. Haushaltsgerät nach einem der vorstehend genannten Ansprüche,
**dadurch gekennzeichnet, dass**
der Schlitten (7) aus einem Werkstoff besteht, der zur Reinigung in einer Geschirrspülmaschine geeignet ist.

8. Haushaltsgerät nach einem der vorstehend genannten Ansprüche,
**dadurch gekennzeichnet, dass**
der Pflegemittelbehälter (2) aus einem Werkstoff besteht, der zur Reinigung in einer Geschirrspülmaschine geeignet ist.

9. Haushaltsgerät nach einem der vorstehend genannten Ansprüche,
**dadurch gekennzeichnet, dass**
der Schlitten (7) insgesamt ein einteilig ausgeführtes Kunststoff-Formteil ist.

10. Haushaltsgerät nach einem der vorstehend genannten Ansprüche,
**dadurch gekennzeichnet, dass**
der Pflegemittelbehälter (2) insgesamt ein einteilig ausgeführtes Kunststoff-Formteil ist.

11. Haushaltsgerät nach einem der vorstehend genannten Ansprüche,
**dadurch gekennzeichnet, dass**
das Haushaltsgerät (1) einen Schacht (10) aufweist, in dem im Betriebszustand der Schlitten (7) zusammen mit dem darin aufgenommenen Pflegemittelbehälter (2) vollständig aufgenommen ist.

12. Haushaltsgerät nach Anspruch 11,
**dadurch gekennzeichnet, dass**
der Schacht (10) durch eine Tür (11) verschließbar ist.

13. Haushaltsgerät nach Anspruch 11 oder 12,
**dadurch gekennzeichnet, dass**
die Endposition des Schlittens (7) in dem Schacht (10) durch eine Rasterung haptisch wahrnehmbar ausgeführt ist.

14. Haushaltsgerät nach einem der vorstehend genannten Ansprüche,
**dadurch gekennzeichnet, dass**
der Schlitten (7) elektromotorisch verfahrbar ausgeführt ist oder an seiner sichtbaren Frontseite einen Griff (12) aufweist.

15. Haushaltsgerät nach Anspruch 14,
**dadurch gekennzeichnet, dass**
der Griff (12) eine Griffmulde ist.

16. Haushaltsgerät nach einem der vorstehend genannten Ansprüche,
**dadurch gekennzeichnet, dass**
das Haushaltsgerät (1) ein Geschirrspüler, ein Getränkeautomat oder eine Waschmaschine ist.

## Claims

1. Household appliance (1) comprising a fluid-carrying flow line system and a maintenance product container (2) that is detachably received in the household appliance (1), in which container a maintenance product (3) that is suitable for the maintenance of the flow line system and has a solid aggregate state is contained, the maintenance product container (1) being received in the household appliance (1) such that the opening (4) of said container is in the geocentric direction (GZ), i.e. points downwards, and, in order to carry out a maintenance programme, a spray device (5) being present which protrudes into the opening (4) of the maintenance product container (2) for spraying the maintenance product (3) with a liquid, thereby producing a solution of the maintenance product (3) as needed, **characterised in that** the maintenance product container (2) can be inserted into a carriage (7) which is movably guided by suitable guide means (6) and the carriage (7) can be entirely removed from the household appliance (1).

2. Household appliance according to claim 1, **characterised in that** the maintenance product container (2) is received in the carriage (7) so as to be interlockingly secured by means of a plug connection, latch connection or threaded connection.

3. Household appliance according to claim 2, **characterised in that** the thread (8, 9) for producing a detachable connection between the maintenance product container (2) and the carriage (7) is multi-threaded.

4. Household appliance according to claim 3, **characterised in that** the thread (8, 9) is self-locking and is double-threaded.

5. Household appliance according to any of the preceding claims, **characterised in that** the spray device (5) has a spray nozzle which protrudes centrally into the opening (4) of the maintenance product container (2) when the maintenance product container (2) is inserted into the household appliance (1).

6. Household appliance according to any of the preceding claims, **characterised in that** the maintenance product container (2) is received in the carriage (7) so as to be vertically aligned.

7. Household appliance according to any of the preceding claims, **characterised in that** the carriage (7) consists of a material which is suitable for cleaning in a dishwasher.

8. Household appliance according to any of the preceding claims, **characterised in that** the maintenance product container (2) consists of a material which is suitable for cleaning in a dishwasher.

9. Household appliance according to any of the preceding claims, **characterised in that** the carriage (7) is overall a one-piece plastics material moulded part.

10. Household appliance according to any of the preceding claims, **characterised in that** the maintenance product container (2) is overall a one-piece plastics material moulded part.

11. Household appliance according to any of the preceding claims, **characterised in that** the household appliance (1) has a shaft (10) in which the carriage (7), together with the maintenance product container (2) received therein, is entirely received in the operating state.

12. Household appliance according to claim 11, **characterised in that** the shaft (10) can be closed by a door (11).

13. Household appliance according to either claim 11 or claim 12, **characterised in that** the end position of the carriage (7) in the shaft (10) is made haptically perceptible by a latching portion.

14. Household appliance according to any of the preceding claims, **characterised in that** the carriage (7) can be moved by an electric motor or comprises a handle (12) on the visible front end thereof.

15. Household appliance according to claim 14, **characterised in that** the handle (12) is a recessed handle.

16. Household appliance according to any of the preceding claims, **characterised in that** the household appliance (1) is a dishwasher, a drinks machine or a washing machine.

## Revendications

1. Appareil ménager (1), comprenant un système de conduites d'écoulement conduisant le fluide et un récipient de produit d'entretien (2), reçu de manière amovible dans l'appareil ménager (1), récipient contenant un produit d'entretien (3) adapté pour l'entretien du système de conduites d'écoulement et présentant un état d'agrégation solide, le récipient de produit d'entretien (1) étant reçu, par son ouverture (4), dans l'appareil ménager (1) en direction géocentrique (GZ), c'est-à-dire orienté vers le bas et, pour l'exécution d'un programme d'entretien, un dispositif de pulvérisation (5) faisant saillie dans l'ouverture (4) du récipient de produit d'entretien (2) étant prévu pour pulvériser un liquide sur le produit d'entretien (3) et produire ainsi, sous conditions et de manière conforme aux besoins, une solution du produit d'entretien (3), **caractérisé en ce que** le récipient de produit d'entretien (2) peut être inséré dans un chariot (7) guidé de manière mobile par des moyens de guidage (6) appropriés, et **en ce que** le chariot (7) peut être entièrement retiré de l'appareil ménager (1).

2. Appareil ménager selon la revendication 1, **caractérisé en ce que** le récipient de produit d'entretien (2) est reçu et fixé dans le chariot (7) par liaison de forme au moyen d'un raccord enfichable, à encliquetage ou fileté.

3. Appareil ménager selon la revendication 2, **caractérisé en ce que** le filetage (8, 9) est réalisé avec des fils multiples pour établir une liaison amovible entre le récipient de produit d'entretien (2) et le chariot (7).

4. Appareil ménager selon la revendication 3, **caractérisé en ce que** le filetage (8, 9) présente un système autobloquant et est réalisé avec deux fils.

5. Appareil ménager selon l'une des revendications précédentes, **caractérisé en ce que** le dispositif de pulvérisation (5) comporte une buse de pulvérisation qui, lorsque le récipient de produit d'entretien (2) est inséré dans l'appareil ménager (1), fait saillie au centre de l'ouverture (4) du récipient de produit d'entretien (2).

6. Appareil ménager selon l'une des revendications précédentes, **caractérisé en ce que** le récipient de produit d'entretien (2) est reçu dans le chariot (7) de manière orientée verticalement.

7. Appareil ménager selon l'une des revendications précédentes, **caractérisé en ce que** le chariot (7) est constitué d'un matériau adapté au nettoyage dans un lave-vaisselle.

8. Appareil ménager selon l'une des revendications précédentes, **caractérisé en ce que** le récipient de produit d'entretien (2) est constitué d'un matériau adapté au nettoyage dans un lave-vaisselle.

9. Appareil ménager selon l'une des revendications précédentes, **caractérisé en ce que** le chariot (7) dans son ensemble est une pièce moulée en plastique réalisée d'une seule pièce.

10. Appareil ménager selon l'une des revendications précédentes, **caractérisé en ce que** le récipient de produit d'entretien (2) dans son ensemble est une pièce moulée en plastique réalisée d'une seule pièce.

11. Appareil ménager selon l'une des revendications précédentes, **caractérisé en ce que** l'appareil ménager (1) comporte une cage (10) dans laquelle, à l'état de fonctionnement, le chariot (7) est entièrement reçu conjointement avec le récipient de produit d'entretien (2) qu'il reçoit.

12. Appareil ménager selon la revendication 11, **caractérisé en ce que** la cage (10) peut être fermée par une porte (11).

13. Appareil ménager selon la revendication 11 ou 12, **caractérisé en ce que** la position finale du chariot (7) dans la cage (10) est réalisée par encliquetage, de manière perceptible haptiquement.

14. Appareil ménager selon l'une des revendications précédentes, **caractérisé en ce que** le chariot (7) est conçu pour être déplacé par un moteur électrique ou comporte une poignée (12) sur sa face avant visible.

15. Appareil ménager selon la revendication 14, **caractérisé en ce que** la poignée (12) est une poignée concave.

16. Appareil ménager selon l'une des revendications précédentes, **caractérisé en ce que** l'appareil ménager (1) est un lave-vaisselle, un distributeur de boissons ou un lave-linge.
